# EUROPEAN PATENT APPLICATION

(11) **EP 4 546 237 A1**
(43) Date of publication of application: **30.04.2025**
(21) Application number: 24208497.8
(22) Date of filing: 23.10.2024
(51) Int. Cl.: G06Q 20/18, G07F 13/02, G07F 15/00, G07F 9/02

(54) **APPARATUS AND PROCESS FOR CONTROLLING A DISPLAY FOR FUEL DISPENSING**

(30) Priority: 24.10.2023 US 202318492883
(71) Applicant: Air Products and Chemicals, Inc., Allentown, PA 18106 (US)
(72) Inventor: Joshi, Prasad Prabhakar, Macungie, 18062 (US); Cohen, Joseph P, Bethlehem, 18017 (US); Brenner, Matthew James, Bangor, 18013 (US); Sane, Anup Vasant, Allentown, 18104 (US)
(74) Representative: Beck Greener LLP

(57) **Abstract**

Systems, apparatuses, controllers, and processes that are configured to facilitate controlling visual information provided via a display at a dispenser while a vehicle is being fueled can be adapted so no use of communication protocols is needed for control of the display. For instance, a controller can be connected with a payment terminal having a screen via multiple different physical connections (e.g. wiring for conveying electricity, optical fiber cables, etc.). One or more of these connections can be activated while others are deactivated in an accordance with a pre-defined scheme to indicate to the payment terminal which of a number of different pre-defined display graphics should be displayed during fueling. Embodiments can be adapted so no payment information or other information is shared between a payment processing device and a fuel dispensing controller and no communication protocol is needed for transport of data between such devices.

## Description

The present innovation relates to systems, apparatuses, controllers, and processes that are configured to facilitate controlling visual information provided via a display at a dispenser while a vehicle is being fueled.

Examples of hydrogen generation and/or supply systems can be appreciated from U.S. Patent Nos. 6,401,767, 6,474,078, 6,619,336, 6,708,573, 6,745,801, 6,786,245, 7,028,724, 7,328,726, 7,793,675, 7,921,883, 8,020,589, 8,286,675, 8,365,777, 8,453,682, 8,899,278, 9,074,730, 9,151,448, 9,261,238, 9,279,541, 9,404,620, 9,863,583, 10,502,649, 10,508,770, and 11,167,732. Examples of hydrogen storage and dispensing systems can also be appreciated from U.S. Patent Application Publication Nos. 2023/0137335 and 2023/0107342. Such systems can provide hydrogen to vehicles for use as a fuel that powers operation of the vehicle.

There are also natural gas based storage and dispensing systems that can provide natural gas for fueling of vehicles that utilize natural gas as a fuel. U.S. Patent Application Publication No. 2014/0202585 discloses an example of such a system.

We have determined that dispensers for dispensing gaseous fuel to a vehicle fuel tank such as natural gas or hydrogen can often have complicated and complex payment terminal communication interfaces. For instance, the type of communication protocol usage for transmitting data between a payment terminal and other components of a fueling station for providing fuel to a customer and receiving payment for that fuel can involve use of different communication protocols and communication security mechanisms to help protect financial data being utilized for such a transaction. We have determined that such complexities and security precautions can be greatly reduced by significantly adjusting the communication process methodology utilized to permit such systems to work in conjunction with a customer fueling his or her vehicle.

Embodiments of our apparatus and process for controlling a display of a payment terminal can be configured to avoid any sensitive financial data from ever having to be provided to a fuel dispensing system. Embodiments can also be configured so that a fuel dispensing controller can be configured to provide control indications to a payment processing terminal without having to provide any data packets or communications via a pre-defined communication protocol. Instead, physically conveyed control indicia can be provided via physical connections (e.g. electrically conductive wiring that may convey current and/or voltage, fiber optic cabling that can convey light, pneumatic connectors that can convey a fluid or pressure differential, etc.). Embodiments can be adapted to utilize a pre-defined control scheme that permits a payment terminal to actuate different displays based on physically received indicators provided from a dispenser controller. The dispenser controller can be configured to provide such control indications in response to physical indicators it can receive from a payment terminal. Such embodiments can avoid use of data packets or any type of actual communicated data being transmitted. Instead, indicators can be provided in accordance with a pre-defined control scheme so that pre-defined displays are output from a screen or other display of a payment terminal based on different physically received indicators in accordance with a pre-defined control scheme and pre-defined graphical indicia that are associated with the different physical indicators.

Embodiments can be configured to permit simpler dispenser and payment terminal integration that can avoid complicated interface mechanisms to permit sharing of data. Further, embodiments can be adapted so that a payment terminal does not have to transmit any type of sensitive financial data or other sensitive data concerning a customer to the fuel dispensing system. Such improved communication flows can provide simpler integration that is also more secure as there are less communication flows that may attempt to be intercepted by a bad actor. This type of improved security can also be provided with less equipment. Communication protocol use and/or translation can also be avoided by embodiments as the use of physically detectable indicators (e.g. light, voltage, current, etc.) can permit indications to be provided without use of any communication protocols (e.g. DART, Hypertext Transfer Protocol (HTTP), International Forecourt Standards Forum (IFSF) communication protocols, Transmission Control Protocol (TCP), Internet Protocol (IP), TCP/IP, a Gilbarco communication protocol, an application programming interface (API) protocol, or other type of communication protocol). Embodiments can be configured to provide significant improvements in data security while reducing the need for equipment and safety precautions to be utilized as well. Embodiments can also be configured so that deployment and installation are simper and fuel dispensing can be more easily integrated with payment processing systems (e.g. point of sale (POS) systems, etc.).

According to a first aspect of the present invention, there is provided a process for controlling a display of a dispenser of fuel, the process comprising: in response to a dispenser controller detecting activation of a first payment terminal connector, the dispenser controller activating a first dispenser controller connector connected between a payment terminal and the dispenser controller to trigger a first adjustment of graphical information shown on the display based on a data store associated with the first dispenser controller connector; and in response to the dispenser controller detecting activation of a second payment terminal connector, the dispenser controller activating a second dispenser controller connector connected between the payment terminal and the dispenser controller to trigger a second adjustment of graphical information shown on the display based on a data store associated with the second dispenser controller connector.

In one embodiment, comprising: in response to the dispenser controller detecting that fueling is complete, the dispenser controller activating a third dispenser controller connector connected between the payment terminal and the dispenser controller to trigger a third adjustment of graphical information shown on the display based on a data store associated with the third dispenser controller connector to instruct a customer that fueling is complete.

In one embodiment, the first payment terminal connector, second payment terminal connector, first dispenser controller connector, second dispenser controller connector and third dispenser controller connector transmit voltage, current, and/or light.

In one embodiment, comprising: in response to the dispenser controller detecting that a nozzle of the dispenser is connected to a fuel tank while the second payment terminal connector is active, the dispenser controller activating a third dispenser controller connector connected between the payment terminal and the dispenser controller to trigger a third adjustment of graphical information shown on the display based on a data store associated with the third dispenser controller connector; and in response to the dispenser controller detecting that fueling is complete, the dispenser controller activating a fourth dispenser controller connector connected between the payment terminal and the dispenser controller to trigger a fourth adjustment of graphical information shown on the display based on a data store associated with the fourth dispenser controller connector to instruct a customer that fueling is complete.

In one embodiment, comprising: in response to the dispenser controller detecting that a nozzle of the dispenser is connected to a fuel tank while the second payment terminal connector is active, the dispenser controller activating a third dispenser controller connector connected between the payment terminal and the dispenser controller to trigger a third adjustment of graphical information shown on the display based on a data store associated with the third dispenser controller connector; in response to the dispenser controller detecting that fuel is being passed to a vehicle fuel tank via the dispenser while the second payment terminal connector is active, the dispenser controller activating a fourth dispenser controller connector connected between the payment terminal and the dispenser controller to trigger a fourth adjustment of graphical information shown on the display based on a data store associated with the fourth dispenser controller connector; and in response to the dispenser controller detecting that fueling is complete, the dispenser controller activating a fifth dispenser controller connector connected between the payment terminal and the dispenser controller to trigger a fifth adjustment of graphical information shown on the display based on a data store associated with the fifth dispenser controller connector to instruct a customer that fueling is complete.

In one embodiment, comprising: the payment terminal activating the first payment terminal connector in response to receipt of financial information received via a reader of the first payment terminal; the payment terminal activating the second payment terminal connector in response to authorization of the financial information.

In one embodiment, comprising: the payment terminal responding to the activating of the first dispenser controller connector by adjusting the display based on the data store associated with the first dispenser controller connector; and the payment terminal responding to the activating of the second dispenser controller connector by adjusting the display based on the data store associated with the second dispenser controller connector.

In one embodiment, the detecting of the activation of the first payment terminal connector occurs without use of a communication protocol and without use of an application programming interface (API) and the activating of the first dispenser controller connector connected between the payment terminal and the dispenser controller to trigger the first adjustment of graphical information shown on the display based on the data store associated with the first dispenser controller connector occurs without use of a communication protocol and without use of an API; and the detecting of the activation of the second payment terminal connector occurs without use of a communication protocol and without use of an API and the activating of the second dispenser controller connector connected between the payment terminal and the dispenser controller to trigger the second adjustment of graphical information shown on the display based on the data store associated with the second dispenser controller connector occurs without use of a communication protocol and without use of an API.

In one embodiment, comprising: adjusting graphical information shown on the display based on the data store associated with the first dispenser controller connector without use of a communication protocol, without use of an application programming interface (API), and without exchanging of customer related information between the dispenser controller and the payment terminal.

In one embodiment, comprising: adjusting graphical information shown on the display based on the data store associated with the second dispenser controller connector without use of a communication protocol, without an API, and without exchanging of customer related information between the dispenser controller and the payment terminal.

According to a second aspect of the present invention, there is provided a control system for an apparatus configured to provide fuel to a dispenser for fueling a vehicle, comprising: a dispenser controller for a dispenser positioned and configured to feed fuel to a vehicle fuel tank, the dispenser controller connected to a payment terminal via a plurality of payment terminal connections and a plurality of dispenser controller connections; the dispenser controller configured so that: in response to detecting activation of a first payment terminal connector of the payment terminal connections, the dispenser controller activates a first dispenser controller connector of the dispenser controller connections to trigger a first adjustment of graphical information shown on a display of the dispenser based on a data store associated with the first dispenser controller connector; and in response to the dispenser controller detecting activation of a second payment terminal connector of the payment terminal connections, the dispenser controller activates a second dispenser controller connector of the dispenser controller connections to trigger a second adjustment of graphical information shown on the display based on a data store associated with the second dispenser controller connector.

In one embodiment, comprising: the payment terminal, the payment terminal being communicatively connected to a non-transitory memory having the data store associated with the first dispenser controller connector and the data store associated with the second dispenser controller connector.

In one embodiment, the plurality of payment terminal connections are configured to transmit voltage, current and/or light, and the plurality of dispenser controller connections are configured to transmit voltage, current and/or light.

In one embodiment, the dispenser controller is also configured so that: in response to the dispenser controller detecting that a nozzle of the dispenser is connected to a fuel tank while the second payment terminal connector is active, the dispenser controller activates a third dispenser controller connector of the dispenser controller connections to trigger a third adjustment of graphical information shown on the display based on a data store associated with the third dispenser controller connector; and in response to the dispenser controller detecting that fueling is complete, the dispenser controller activates a fourth dispenser controller connector of the dispenser controller connections to trigger a fourth adjustment of graphical information shown on the display based on a data store associated with the fourth dispenser controller connector to instruct a customer that fueling is complete.

In one embodiment, the dispenser controller is also configured so that: in response to the dispenser controller detecting that a nozzle of the dispenser is connected to a fuel tank while the second payment terminal connector is active, the dispenser controller activating a third dispenser controller connector of the dispenser controller connections to trigger a third adjustment of graphical information shown on the display based on a data store associated with the third dispenser controller connector; in response to the dispenser controller detecting that fuel is being passed to a vehicle fuel tank via the dispenser while the second payment terminal connector is active, the dispenser controller activates a fourth dispenser controller connector of the dispenser controller connections to trigger a fourth adjustment of graphical information shown on the display based on a data store associated with the fourth dispenser controller connector; and in response to the dispenser controller detecting that fueling is complete, the dispenser controller activates a fifth dispenser controller connector of the dispenser controller connections to trigger a fifth adjustment of graphical information shown on the display based on a data store associated with the fifth dispenser controller connector to instruct a customer that fueling is complete.

In one embodiment, comprising: the payment terminal, the payment terminal being communicatively connected to a non-transitory memory having the data store associated with the first dispenser controller connector, the data store associated with the second dispenser controller connector, the data store associated with the third dispenser controller connector, the data store associated with the fourth dispenser controller connector, and the data store associated with the fifth dispenser controller connector.

In one embodiment, the dispenser controller and the payment terminal are configured such that: the detecting of the activation of the first payment terminal connector occurs without use of a communication protocol and without use of an application programming interface (API) and the activating of the first dispenser controller connector connected between the payment terminal and the dispenser controller to trigger the first adjustment of graphical information shown on the display based on the data store associated with the first dispenser controller connector occurs without use of a communication protocol and without use of an API; the detecting of the activation of the second payment terminal connector occurs without use of a communication protocol and without use of an API and the activating of the second dispenser controller connector to trigger the second adjustment of graphical information shown on the display based on the data store associated with the second dispenser controller connector occurs without use of a communication protocol and without use of an API; the detecting of the activating of the third dispenser controller connector to trigger the third adjustment of graphical information shown on the display based on the data store associated with the third dispenser controller connector occurs without use of a communication protocol and without use of an API; the detecting of the activating of the fourth dispenser controller connector to trigger the fourth adjustment of graphical information shown on the display based on the data store associated with the fourth dispenser controller connector occurs without use of a communication protocol and without use of an API; and
the detecting of the activating of the fifth dispenser controller connector to trigger the fifth adjustment of graphical information shown on the display based on the data store associated with the fifth dispenser controller connector occurs without use of a communication protocol and without use of an API.

According to a third aspect of the present invention, there is provided a dispenser controller comprising: a processor connected to a non-transitory memory; a plurality of physical connection terminals having: a first input terminal for a first payment terminal connector extending between a payment terminal and the first input terminal; a second input terminal for a second payment terminal connector extending between the payment terminal and the second input terminal; a first output terminal for a first dispenser controller connector extending between the first output terminal and the payment terminal; a second output terminal for a second dispenser controller connector extending between the second output terminal and the payment terminal; and a third output terminal for a third dispenser controller connector extending between the third output terminal and the payment terminal; wherein the dispenser controller is configured so that: in response to detecting activation of the first payment terminal connector, the dispenser controller activates the first dispenser controller connector to trigger a first adjustment of graphical information shown on a display of a dispenser based on a data store associated with the first dispenser controller connector; in response to the dispenser controller detecting activation of the second payment terminal connector, the dispenser controller activates the second dispenser controller connector to trigger a second adjustment of graphical information shown on the display based on a data store associated with the second dispenser controller connector; and in response to the dispenser controller detecting that the second payment terminal connector is active and that fueling is completed, the dispenser controller activates the third dispenser controller connector to trigger a third adjustment of graphical information shown on the display based on a data store associated with the third dispenser controller connector.

In one embodiment, the first input terminal is configured to detect voltage, current and/or light transmitted via the first payment terminal connector; the second input terminal is configured to detect voltage, current and/or light transmitted via the second payment terminal connector; the first output terminal is configured to transmit voltage, current and/or light via the first dispenser controller connector; the second output terminal is configured to transmit voltage, current and/or light via the second dispenser controller connector; and the third output terminal is configured to transmit voltage, current and/or light via the third dispenser controller connector.

In one embodiment, the dispenser controller is configured so that the detecting of the activation of the first payment terminal connector occurs without use of a communication protocol and without use of an application programming interface (API) and the detecting of the activation of the second payment terminal connector occurs without use of a communication protocol and without use of an API.

In a first aspect, a process for controlling a display of a dispenser of fuel is provided. Embodiments of the process can be configured so that, in response to a dispenser controller detecting activation of a first payment terminal connector, the dispenser controller activates a first dispenser controller connector connected between a payment terminal and the dispenser controller to trigger a first adjustment of graphical information shown on the display based on a data store associated with the first dispenser controller connector. In response to the dispenser controller detecting activation of a second payment terminal connector, the dispenser controller can activate a second dispenser controller connector connected between the payment terminal and the dispenser controller to trigger a second adjustment of graphical information shown on the display based on a data store associated with the second dispenser controller connector.

Embodiments of the process can also include other steps or features. The dispenser controller can be a computer device that includes hardware. The hardware can include a processor connected to non-transitory memory and a plurality of input terminals and output terminals. The input terminals and output terminals of the dispenser controller can be components of an input/output (I/O) interface (e.g. be components of a plurality of physical connector terminals).

In a second aspect, the process can also be configured so that in response to the dispenser controller detecting that fueling is complete, the dispenser controller activates a third dispenser controller connector connected between the payment terminal and the dispenser controller to trigger a third adjustment of graphical information shown on the display based on a data store associated with the third dispenser controller connector to instruct a customer that fueling is complete. In some embodiments, the first payment terminal connector, second payment terminal connector, first dispenser controller connector, second dispenser controller connector and third dispenser controller connector can each be configured to transmit voltage, current, and/or light.

In a third aspect, the process can be configured to utilize yet other approaches for different dispenser controller connector configurations. For instance, in some embodiments, the process can be configured so that in response to the dispenser controller detecting that a nozzle of the dispenser is connected to a fuel tank while the second payment terminal connector is active, the dispenser controller activates a third dispenser controller connector connected between the payment terminal and the dispenser controller to trigger a third adjustment of graphical information shown on the display based on a data store associated with the third dispenser controller connector. In response to the dispenser controller detecting that fueling is complete, the dispenser controller can activate a fourth dispenser controller connector connected between the payment terminal and the dispenser controller to trigger a fourth adjustment of graphical information shown on the display based on a data store associated with the fourth dispenser controller connector to instruct a customer that fueling is complete.

As another example, some embodiments of the process can be configured so that in response to the dispenser controller detecting that a nozzle of the dispenser is connected to a fuel tank while the second payment terminal connector is active, the dispenser controller activates a third dispenser controller connector connected between the payment terminal and the dispenser controller to trigger a third adjustment of graphical information shown on the display based on a data store associated with the third dispenser controller connector. In response to the dispenser controller detecting that fuel is being passed to a vehicle fuel tank via the dispenser while the second payment terminal connector is active, the dispenser controller can activate a fourth dispenser controller connector connected between the payment terminal and the dispenser controller to trigger a fourth adjustment of graphical information shown on the display based on a data store associated with the fourth dispenser controller connector. In response to the dispenser controller detecting that fueling is complete, the dispenser controller can activate a fifth dispenser controller connector connected between the payment terminal and the dispenser controller to trigger a fifth adjustment of graphical information shown on the display based on a data store associated with the fifth dispenser controller connector to instruct a customer that fueling is complete.

In a fourth aspect, embodiments of the process can be configured to include steps involving a payment terminal performing one or more actions. The payment terminal can be a type of computer device that includes a processor connected to a non-transitory memory that is adapted for receipt of payment information from a customer for facilitating a financial transaction. The payment terminal can be communicatively connected to a cloud based payment processing system in some embodiments as well. The payment terminal can also include a plurality of input/output (I/O) interfaces. For example, the payment terminal can include a plurality of physical connector terminals that can include input terminals and output terminals.

In some embodiments, the payment terminal can activate the first payment terminal connector in response to receipt of financial information received via a reader of the first payment terminal. The payment terminal can also activate the second payment terminal connector in response to authorization of the financial information. After the second payment terminal connector is activated, the first payment terminal connector can be deactivated or can remain activated.

In some embodiments, the payment terminal can respond to the activating of the first dispenser controller connector by adjusting the display based on the data store associated with the first dispenser controller connector. The payment terminal can also respond to the activating of the second dispenser controller connector by adjusting the display based on the data store associated with the second dispenser controller connector.

In a fifth aspect, detection of activation of different payment terminal connectors and/or dispenser controller connectors can occur without use of an exchange of data packets and/or without use of any type of communication protocol (e.g. Session Initiation Protocol, HTTP, etc.). Embodiments can also be configured so that there is no exchanging of customer related information between the dispenser controller and the payment terminal. For instance, in some embodiments, the detecting of the activation of the first payment terminal connector can occur without use of a communication protocol and without use of an application programming interface (API) and the activating of the first dispenser controller connector connected between the payment terminal and the dispenser controller to trigger the first adjustment of graphical information shown on the display based on the data store associated with the first dispenser controller connector occurs without use of a communication protocol and without use of an API. Also, the detecting of the activation of the second payment terminal connector can occur without use of a communication protocol and without use of an API and the activating of the second dispenser controller connector connected between the payment terminal and the dispenser controller to trigger the second adjustment of graphical information shown on the display based on the data store associated with the second dispenser controller connector occurs without use of a communication protocol and without use of an API.

As another example, embodiments of the process can be configured so that adjusting graphical information shown on the display is based on the data store associated with the first dispenser controller connector without use of a communication protocol, without use of an application programming interface (API), and without exchanging of customer related information between the dispenser controller and the payment terminal. Also, adjusting graphical information shown on the display based on the data store associated with the second dispenser controller connector without use of a communication protocol, without an API, and without exchanging of customer related information between the dispenser controller and the payment terminal.

In a sixth aspect, the process of the first aspect can include one or more features of the second aspect, third aspect, fourth aspect, and/or fifth aspect. Some embodiments can also utilize other features. Examples of such features include exemplary features and process steps discussed herein. It should therefore be appreciated that other embodiments of the process can include other processing steps and/or other features. Also, embodiments of the process can utilize embodiments of a control system as discussed herein.

In a seventh aspect, a control system for an apparatus configured to provide fuel to a dispenser for fueling a vehicle is provided. Embodiments of the control system can be configured to implement an embodiment of our process. Some embodiments of the control system can include a dispenser controller for a dispenser positioned and configured to feed fuel to a vehicle fuel tank. The dispenser controller can be connected to a payment terminal via a plurality of payment terminal connections and a plurality of dispenser controller connections. The dispenser controller can be configured so that: (i) in response to detecting activation of a first payment terminal connector of the payment terminal connections, the dispenser controller activates a first dispenser controller connector of the dispenser controller connections to trigger a first adjustment of graphical information shown on a display of the dispenser based on a data store associated with the first dispenser controller connector; and (ii) in response to the dispenser controller detecting activation of a second payment terminal connector of the payment terminal connections, the dispenser controller activates a second dispenser controller connector of the dispenser controller connections to trigger a second adjustment of graphical information shown on the display based on a data store associated with the second dispenser controller connector.

In an eighth aspect, the control system can also include the payment terminal. The payment terminal can be communicatively connected to a non-transitory memory having the data store associated with the first dispenser controller connector and the data store associated with the second dispenser controller connector.

In a ninth aspect, the plurality of payment terminal connections can be configured to transmit voltage, current and/or light, and the plurality of dispenser controller connections are configured to transmit voltage, current and/or light.

In a tenth aspect, the dispenser controller can also be configured so that additional dispenser controller connections are utilized. For example, some embodiments can be provided so that the dispenser controller is also configured so that: (iii) in response to the dispenser controller detecting that a nozzle of the dispenser is connected to a fuel tank while the second payment terminal connector is active, the dispenser controller activates a third dispenser controller connector of the dispenser controller connections to trigger a third adjustment of graphical information shown on the display based on a data store associated with the third dispenser controller connector; and (iv) in response to the dispenser controller detecting that fueling is complete, the dispenser controller activates a fourth dispenser controller connector of the dispenser controller connections to trigger a fourth adjustment of graphical information shown on the display based on a data store associated with the fourth dispenser controller connector to instruct a customer that fueling is complete.

As another example, embodiments can be configured so that the dispenser controller is also configured so that: (iii) in response to the dispenser controller detecting that a nozzle of the dispenser is connected to a fuel tank while the second payment terminal connector is active, the dispenser controller activates a third dispenser controller connector of the dispenser controller connections to trigger a third adjustment of graphical information shown on the display based on a data store associated with the third dispenser controller connector; (iv) in response to the dispenser controller detecting that fuel is being passed to a vehicle fuel tank via the dispenser while the second payment terminal connector is active, the dispenser controller activates a fourth dispenser controller connector of the dispenser controller connections to trigger a fourth adjustment of graphical information shown on the display based on a data store associated with the fourth dispenser controller connector; and (v) in response to the dispenser controller detecting that fueling is complete, the dispenser controller activates a fifth dispenser controller connector of the dispenser controller connections to trigger a fifth adjustment of graphical information shown on the display based on a data store associated with the fifth dispenser controller connector to instruct a customer that fueling is complete.

Embodiments can be configured so that the payment terminal is communicatively connected to a non-transitory memory having the data store associated with the first dispenser controller connector, the data store associated with the second dispenser controller connector, the data store associated with the third dispenser controller connector, the data store associated with the fourth dispenser controller connector, and the data store associated with the fifth dispenser controller connector. The payment terminal can also be connected to memory that has other data stores associated with other dispenser controller connectors as well.

In an eleventh aspect, the dispenser controller and the payment terminal can be configured such that the detecting of the activation payment terminal connectors and/or dispenser controller connectors occurs without use of a communication protocol and/or an API and/or without an exchange of financial transaction data between the payment terminal and the dispenser controller. For instance, some embodiments can be configured so that (i) the detecting of the activation of the first payment terminal connector occurs without use of a communication protocol and without use of an application programming interface (API) and the activating of the first dispenser controller connector connected between the payment terminal and the dispenser controller to trigger the first adjustment of graphical information shown on the display based on the data store associated with the first dispenser controller connector occurs without use of a communication protocol and without use of an API; (ii) the detecting of the activation of the second payment terminal connector occurs without use of a communication protocol and without use of an API and the activating of the second dispenser controller connector to trigger the second adjustment of graphical information shown on the display based on the data store associated with the second dispenser controller connector occurs without use of a communication protocol and without use of an API; (iii) the detecting of the activating of the third dispenser controller connector to trigger the third adjustment of graphical information shown on the display based on the data store associated with the third dispenser controller connector occurs without use of a communication protocol and without use of an API; (iv) the detecting of the activating of the fourth dispenser controller connector to trigger the fourth adjustment of graphical information shown on the display based on the data store associated with the fourth dispenser controller connector occurs without use of a communication protocol and without use of an API; and/or (v) the detecting of the activating of the fifth dispenser controller connector to trigger the fifth adjustment of graphical information shown on the display based on the data store associated with the fifth dispenser controller connector occurs without use of a communication protocol and without use of an API.

In a twelfth aspect, the control system of the seventh aspect can include one or more features of the eighth aspect, ninth aspect, tenth aspect, and/or eleventh aspect. Some embodiments can also utilize other features as well. Examples of such features include exemplary features and configurations discussed herein. It should therefore be appreciated that other embodiments of the control system can include other configurations and/or other features.

In a thirteenth aspect, a dispenser controller is provided. The dispenser controller can include a processor connected to a non-transitory memory. The processor of the dispenser controller can also be connected to a plurality of physical connection terminals. The physical connection terminals can have: (a) a first input terminal for a first payment terminal connector extending between a payment terminal and the first input terminal; (b) a second input terminal for a second payment terminal connector extending between the payment terminal and the second input terminal; (c) a first output terminal for a first dispenser controller connector extending between the first output terminal and the payment terminal; (d) a second output terminal for a second dispenser controller connector extending between the second output terminal and the payment terminal; and (e) a third output terminal for a third dispenser controller connector extending between the third output terminal and the payment terminal.

The dispenser controller can be configured so that: (i) in response to detecting activation of the first payment terminal connector, the dispenser controller activates the first dispenser controller connector to trigger a first adjustment of graphical information shown on a display of a dispenser based on a data store associated with the first dispenser controller connector; (ii) in response to the dispenser controller detecting activation of the second payment terminal connector, the dispenser controller activates the second dispenser controller connector to trigger a second adjustment of graphical information shown on the display based on a data store associated with the second dispenser controller connector; and (iii) in response to the dispenser controller detecting that the second payment terminal connector is active and that fueling is completed, the dispenser controller activates the third dispenser controller connector to trigger a third adjustment of graphical information shown on the display based on a data store associated with the third dispenser controller connector.

In a fourteenth aspect, the first input terminal can configured to detect voltage, current and/or light transmitted via the first payment terminal connector, the second input terminal can be configured to detect voltage, current and/or light transmitted via the second payment terminal connector; the first output terminal can be configured to transmit voltage, current and/or light via the first dispenser controller connector, the second output terminal can be configured to transmit voltage, current and/or light via the second dispenser controller connector, and the third output terminal is configured to transmit voltage, current and/or light via the third dispenser controller connector. In some embodiments, there may be additional output terminals configured to transmit voltage, current and/or light via the other dispenser controller connectors. There can also be other input terminals configured to detect voltage, current and/or light transmitted via the other payment terminal connectors.

In a fifteenth aspect, the dispenser controller can be configured so that the detecting of the activation of the first payment terminal connector occurs without use of a communication protocol and without use of an API and the detecting of the activation of the second payment terminal connector occurs without use of a communication protocol and without use of an API. Such detecting can also occur without any receipt of data related to any financial transactions that a payment terminal may receive. Embodiments can be configured to help avoid use of firewalls as well or avoid a need for a firewall for interactions between the dispenser controller and a payment terminal that can be connectable to the dispenser controller.

It should be appreciated that embodiments of the process, apparatus, system, controller, and apparatus can utilize various different arrangements and process control elements. Examples of such features and combination of features include features shown in the exemplary embodiments illustrated in the drawings and/or discussed herein. Different embodiments may utilize different sensors, detectors, controllers, electricity conduction devices, and/or other elements, for example. Various different arrangements and process control systems can be utilized to meet a particular set of design criteria.

Other details, objects, and advantages of our controllers, systems, apparatuses, and processes that are configured to control the display of information during fueling of a vehicle and methods of making and using the same will become apparent as the following description of certain exemplary embodiments thereof proceeds.

Exemplary embodiments of our controllers, systems, apparatuses, and processes that are configured to control a display during fueling of a vehicle and methods of making and using the same are shown in the drawings included herewith. It should be understood that like reference characters used in the drawings may identify like components.

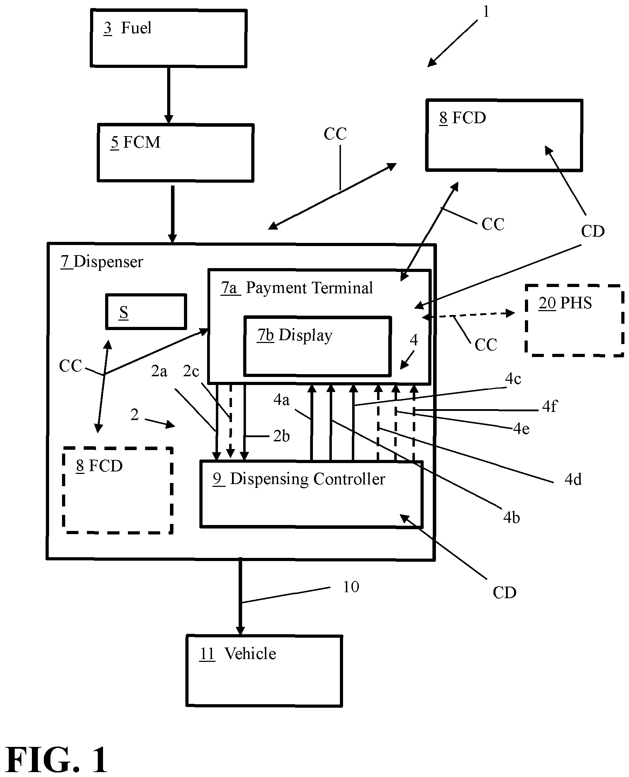

Figure 1 is a schematic block diagram of a first exemplary embodiment of an apparatus 1 configured to dispense fuel to a vehicle that includes an exemplary embodiment of a control system configured to control a display during fueling of a vehicle. The control system includes an exemplary embodiment of a controller configured to control a display during fueling of a vehicle.

An alternative configuration that utilizes a fueling calculator device (FCD) 8 that is positioned within a dispenser 7 is also shown in broken line in Figure 1 as an altemative to a remotely positioned FCD 8 shown in solid line in Figure 1.

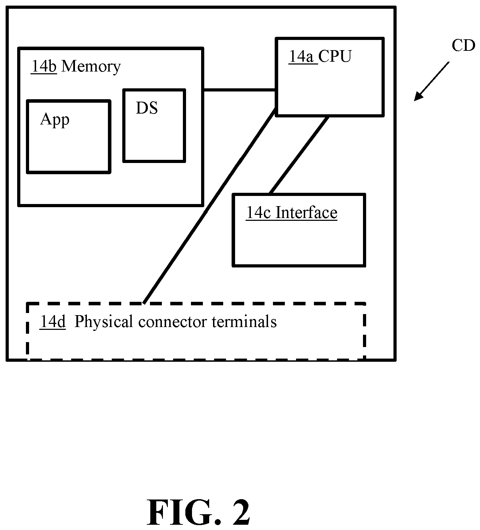

Figure 2 is a schematic block diagram of an exemplary embodiment of a computer device CD that can be utilized in the first exemplary embodiment of the control system configured to control a display during fueling of a vehicle.

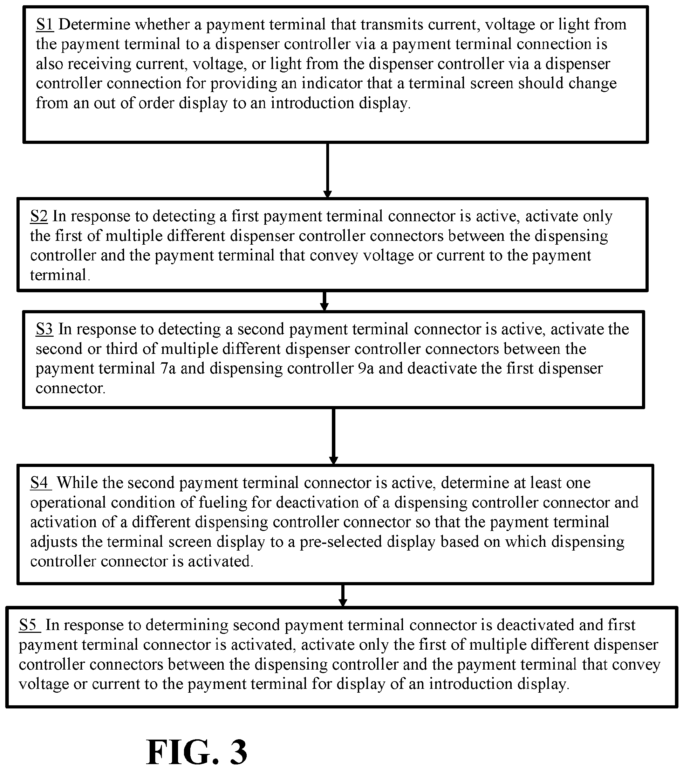

Figure 3 is a flow chart illustrating a first exemplary embodiment of a process for controlling a display during fueling of a vehicle. An apparatus configured to dispense fuel to a vehicle that includes an exemplary embodiment of the control system configured to control a display during fueling of a vehicle illustrated in Figure 1 can implement an embodiment of this process. A controller of this control system can be configured to function to oversee, monitor and/or control utilization of this exemplary embodiment of the process, for example.

Referring to Figures 1-3, an apparatus 1 configured to provide fuel to a dispenser 7 for fueling a vehicle 11 can include at least one source of fuel 3. The source of fuel 3 can include at least one storage tank or vessel configured to store liquid hydrogen or liquid natural gas that can be vaporized into a gas and subsequently stored in one or more buffer tanks and/or fed to a flow control manifold (FCM) 5 for feeding to one or more dispensers 7 of a fueling station. The source of fuel 3 can also include a storage tank or vessel that can store gaseous hydrogen or other fueling gas for feeding to a flow control manifold 5 for feeding to one or more dispensers 7 of a fueling station. Each dispenser 7 can include a fuel tank connector 10 that can include a nozzle connected to a hose for connection of the nozzle to a fuel tank of a vehicle 11 for feeding the gaseous fuel output from the FCM 5 to the vehicle fuel tank via a dispenser 7.

The dispenser 7 can include a sensor S that can monitor the flow of gaseous fuel being fed to a vehicle fuel tank. For instance, the sensor S can be a flowmeter or other type of sensor or arrangement of sensors for use in determining an amount of fuel fed to a vehicle fuel tank during fueling operations.

The sensor S can provide that measurement data to a fueling calculator device (FCD) 8. The FCD 8 can be a type of computer device CD that can receive sensor data and determine the amount of fuel dispensed to a vehicle via the dispenser 7. The FCD 8 can be communicatively connected to the sensor S to receive that data via a communicative connection CC. This type of connection can be a network connection, a wireless communication connection, or other type of communicative connection.

The FCD 8 can provide the calculated fueling data to a payment terminal 7a for charging a customer for the amount of fuel dispensed to the customer's vehicle 11. The FCD can be positioned remote from the dispenser 7 (as shown in solid line in Figure 1) or can alternatively be positioned within the dispenser 7 (e.g. be within a common housing or assembly of the dispenser 7 and other dispenser components as shown in broken line in Figure 1).

The payment terminal 7a can be a type of computer device CD. For instance, the FCD 8 can have a communicative connection CC to the payment terminal 7a to provide fueling data information concerning the number of kilograms, liters or gallons of fuel fed to a vehicle via a dispenser 7 for the payment terminal to utilize in charging the customer for the fuel. The payment terminal 7a can be configured to calculate the overall fee owed by the customer based on the FCD fueling data received from the FCD 8 and update a display to the customer to indicate the amount of fuel dispensed to the customer and the fee owed for that fuel. The payment terminal 7a can also be configured to receive payment data from the consumer (e.g. via a credit card reading device or other type of payment reader or payment interface device such as, for example, a radio frequency identification device or payment chip reading device, etc.) for charging the customer for the fee owed after the consumer finished dispensing fuel to the consumer's vehicle 11. The payment terminal 7a can have a communicative connection CC to a cloud based payment hosting system (PHS) for managing payment information and facilitating the management of payment processing data for collection of payment from different consumers and their financial institutions as well (shown in broken line).

It should be appreciated that at least some communicative connections CC can utilize other elements for the communicative connection. For example, some wireless communicative connections can involve use of an access point, router, base station, gateway, and/or intermediate nodes.

The display 7b of the payment terminal 7a or the display 7b connected to the payment terminal 7a can also be configured to display graphical information to a customer during fueling to help indicate to the customer how to initiate fueling, payment processing and/or other actions in the fueling process via use of the dispenser 7. The display of such graphical information can include the display of text, images and/or other indicia to communicate information to the consumer about the fueling processes and/or payment authorization process associated with the fueling of the consumer's vehicle 11.

A dispensing controller 9 can be positioned to facilitate control of the dispenser 7 for the output of fuel to a vehicle fuel tank and managing the fueling process at the dispenser 7. The dispenser controller 9 can be physically connected to the payment terminal 7a via multiple dispenser controller connections 4 and multiple payment terminal connections 2. Each dispenser controller connection 4 can include a wire, a fiber optic cable or other type of physical connection from the dispenser controller 9 to the payment terminal 7a so that current, voltage, or light can be transmitted from the dispenser controller 9 to the payment terminal 7a via that connection. For instance, each dispenser controller connection 4 can include an insulated copper or insulated aluminum wire that can facilitate the transmission of electrical current or voltage from the dispenser controller 9 to the payment terminal 7a via that connection. As another example, each dispenser controller connection 4 can include a fiber optic cable to facilitate the transmission of light from the dispenser controller 9 to the payment terminal 7a via that connection. The dispenser controller 9 can have different output terminal for each of the different dispenser controller connections 4 and the payment terminal 7a can have different input terminals for each dispenser controller connection 4 so that each connection's conveyance of current, voltage or light can be output from the dispenser controller 9 via a different output terminal and received at the payment terminal 7a via a respective input terminal for detection at that input terminal.

Each dispenser controller connection 4 can be associated with a different pre-defined graphical display or graphical user display to be shown via the display 7b. The payment terminal 7a can be configured to facilitate the display of such a pre-defined graphic in response to detection of which dispenser controller connection 4 is active while others are not active (e.g. a graphic associated with an active connection can be shown via the display 7b based on the detection of which display controller connection 4 is active).

The payment terminal 7a can also be connected to the dispenser controller 9 via one or more physical payment terminal connections 2. For instance, each payment terminal connection 2 can include an insulated copper or insulated aluminum wire that can facilitate the transmission of electrical current or voltage from the payment terminal 7a to the dispenser controller 9 via that connection. As another example, each payment terminal connection 2 can include a fiber optic cable to facilitate the transmission of light from the payment terminal 7a to the dispenser controller 9 via that connection. The payment terminal 7a can have different output terminals for the different payment terminal connections 2 and the dispenser controller 9 can have different input terminals for each payment terminal connection 2 so that each connection's conveyance of current, voltage or light can be output from the payment terminal 7a and received at a respective input terminal of the dispenser controller 9 for detection at that input terminal. Each payment terminal connection 2 can be detected by the dispenser controller 9 for activation of different dispenser controller connections 4.

The dispenser controller 9 can also be configured to deactivate all the dispenser controller connections 4 when none of the payment terminal connections 2 are active. The payment terminal 7a can be configured to detect such non-active dispenser controller connections 4 such that the display 7b displays a default graphic (e.g. a welcome screen display, an error message indicating the dispenser 7 is unavailable and service personnel are to address that issue, a default screen display with pre-defined text and/or visual indicia and/or image(s), etc.).

As may best be appreciated from Figure 2, the payment terminal 7a, FCD 8, and dispenser controller 9 can each be a computer device CD. Each computer device CD is a type of machine or hardware element. For instance, each computer device CD can include a processor (CPU) 14a connected to non-transitory memory 14b that has one or more applications (App) stored thereon and a number of data stores (DS) stored thereon. Each computer device CD can also include one or more interfaces 14c. Each interface can include a transceiver for communicative connections with one or more input devices, one or more output devices, or other device. For example, the payment terminal 7a can include an interface 14c that includes at least one local area network connection transceiver, at least one wide area network connection transceiver and/or at least one near field communication transceiver. The transceivers can be configured for communications that can be facilitated via wireless communication and/or hard wired communicative connections. The payment terminal's interface 14c can also include at least one payment reader (e.g. a credit card reader, a bar code reader, a radio frequency identification reader, etc.).

The payment terminal 7a and the dispenser controller 9 can also include a plurality of physical connector terminals 14d. Each terminal of the physical connector terminals 14d can be connected to a respective one of the payment terminal connections 2 and dispenser controller connections 4 for connecting those connections between the payment terminal 7a and the dispenser controller 9.

In some embodiments, the physical connector terminals 14d can be different input/output (I/O) terminals for the dispenser controller 9 and the payment terminal 7a. For instance, the physical connector terminals 14d of the payment terminal 7a can include multiple different output terminals for multiple different payment terminal connections 2 and the dispenser controller 9 can include multiple different input terminals for the multiple different payment terminal connections 2. The physical connector terminals 14d of the payment terminal 7a can also include a multiple different input terminals for multiple different dispenser controller connections 4 and the dispenser controller 9 can include multiple different output terminals for these different dispenser controller connections 4.

For example, a first payment terminal connector 2a of the payment terminal connections 2 can have an output end connected to a first output terminal of the payment terminal 7a and an input end connected to a first input terminal of the dispenser controller 9. A second payment terminal connector 2b of the payment terminal connections 2 can have an output end connected to a second output terminal of the payment terminal 7a and an input end connected to a second input terminal of the dispenser controller 9. In some embodiments, there may only be two payment terminal connections 2 (e.g. first and second payment terminal connectors 2a and 2b). In other embodiments, there can be three or more than three payment terminal connections 2. For instance, as shown in broken line in Figure 1, some embodiments can include at least one third payment terminal connector 2c of the payment terminal connections 2 that can have an output end connected to a third output terminal of the payment terminal 7a and an input end connected to a third input terminal of the dispenser controller 9.

A first dispenser controller connector 4a of the dispenser controller connections 4 can include an output end connected to a first output terminal of the dispenser controller 9 and an input end connected to a first input terminal of the payment terminal 7a. A second dispenser controller connector 4b of the dispenser controller connections 4 can include an output end connected to a second output terminal of the dispenser controller 9 and an input end connected to a second input terminal of the payment terminal 7a. A third dispenser controller connector 4c of the dispenser controller connections 4 can include an output end connected to a third output terminal of the dispenser controller 9 and an input end connected to a third input terminal of the payment terminal 7a. Some embodiments can only utilize three dispenser controller connections 4. Other embodiments can utilize more than three dispenser controller connections 4.

Some embodiments of the dispenser controller 9 and payment terminal 7a can include additional physical connector terminals 14d. For example, there can be a fourth dispenser controller connector 4d of the dispenser controller connections 4 that can include an output end connected to a fourth output terminal of the dispenser controller 9 and an input end connected to a fourth input terminal of the payment terminal 7a, a fifth dispenser controller connector 4e of the dispenser controller connections 4 that includes an output end connected to a fifth output terminal of the dispenser controller 9 and an input end connected to a fifth input terminal of the payment terminal 7a, and a sixth dispenser controller connector 4f of the dispenser controller connections 4 that can include an output end connected to a sixth output terminal of the dispenser controller 9 and an input end connected to a sixth input terminal of the payment terminal 7a. Each payment terminal connector and dispenser controller connector can be a wire, a fiber optic cable, or other type of physical connector that can facilitate transmission of a type of physical signal (e.g. electricity, voltage, current, light, etc.).

The payment terminal 7a can include a database or other type of data store (DS) that can associate multiple different graphical representations to be displayed via the display 7b based on which of the dispenser controller connectors are active at a given time. For instance, if no dispenser controller connector is active, a first graphic or graphic file can be stored in the memory 14b of the payment terminal 7a for display on the display 7b or generation of the first graphic via the display 7b. This first graphic can be default graphic that can be configured as a customer welcome graphic that includes text and/or images to welcome a customer and invite the customer to initiate fueling by providing payment information such as a credit card to a RFID reader or credit card reader device. Alternatively, this first graphic can be a default graphic that is configured to indicate that the dispenser 7 is unavailable and requires maintenance or other type of attention. A second graphic or graphic file can be stored in the memory 14b of the payment terminal 7a for display on the display 7b or generation of the second graphic via the display 7b. This second graphic can be associated with activation of the first dispenser controller connector 4a so that when this first dispenser controller connector 4a is active and provides input to the first input terminal of the payment terminal 7a, the payment terminal 7a causes the second graphic to be displayed on the display 7b. In embodiments where the first graphic that is displayed invites the customer to provide payment information, the second graphic can include text and/or images to be displayed to let a customer know that the customer's payment information is being evaluated to authorize the customer for use of the dispenser for fueling the customer's vehicle. In embodiments where the first graphic provides a display indicating that the dispenser 7 is unavailable, the second graphic can be configured as a customer welcome graphic that includes text and/or images to welcome a customer and invite the customer to initiate fueling by providing payment information such as a credit card to a RFID reader or credit card reader device.

Also, a third graphic or graphic file can be stored in the memory 14b of the payment terminal 7a for display on the display 7b or generation of the third graphic via the display 7b. This third graphic can be associated with activation of the second dispenser controller connector 4b so that when this second dispenser controller connector 4b is active and provides input to the second input terminal of the payment terminal 7a, the payment terminal 7a causes the third graphic that that can include text and/or images to be displayed. In embodiments where the second graphic can include text and/or images to be displayed to let a customer know that the customer's payment information is being evaluated to authorize the customer for use of the dispenser for fueling the customer's vehicle, the third graphic can be configured to let a customer know that the customer's payment information was authorized and that the customer can remove the nozzle of the dispenser from the dispenser for connection to the customer's vehicle fuel tank for fueling. In embodiments where the second graphic can be configured as a customer welcome graphic that includes text and/or images to welcome a customer and invite the customer to initiate fueling by providing payment information such as a credit card to a RFID reader or credit card reader device, the third graphic can include text and/or images to be displayed to let a customer know that the customer's payment information is being evaluated to authorize the customer for use of the dispenser for fueling the customer's vehicle.

A fourth graphic or graphic file can be stored in the memory 14b of the payment terminal 7a for display on the display 7b or generation of the fourth graphic via the display 7b as well. This fourth graphic can be associated with activation of the third dispenser controller connector 4c so that when this third dispenser controller connector 4c is active and provides input to the third input terminal of the payment terminal 7a, the payment terminal 7a causes the fourth graphic that can include text and/or images to be displayed. For instance, in embodiments where the third graphic can be configured to let a customer know that the customer's payment information was authorized and that the customer can remove the nozzle of the dispenser from the dispenser for connection to the customer's vehicle fuel tank for fueling, the fourth graphic can include text and/or images to let a customer know information about a status of the customer's fueling. In embodiments where the third graphic can include text and/or images to be displayed to let a customer know that the customer's payment information is being evaluated to authorize the customer for use of the dispenser for fueling the customer's vehicle, the fourth graphic can include text and/or images to let a customer know that the customer's payment information was authorized and that the customer can remove the nozzle of the dispenser from the dispenser for connection to the customer's vehicle fuel tank for fueling.

Additional graphics or graphic files can also be stored in the memory 14b of the payment terminal 7. For instance, a fifth graphic or graphic file can be stored in the memory 14b of the payment terminal 7a for display on the display 7b or generation of a fifth graphic via the display 7b as well. This fifth graphic can be associated with activation of a fourth dispenser controller connector 4d so that when this fourth dispenser controller connector 4d is active and provides input to the fourth input terminal of the payment terminal 7a, the payment terminal 7a causes the fifth graphic that can include text and/or images to be displayed. For instance, in embodiments where the fourth graphic can be configured to let a customer know that the customer's payment information was authorized and that the customer can remove the nozzle of the dispenser from the dispenser for connection to the customer's vehicle fuel tank for fueling, the fifth graphic can include text and/or images to let a customer know information about a status of the customer's fueling.

The dispenser controller 9 can be configured to actuate the first dispenser controller connector 4a to trigger adjustment in the display 7b via the payment terminal 7a in response to the payment terminal activating the first payment terminal connector 2a. For example, the payment terminal 7a can be configured to activate the first payment terminal connector 2a in response to confirming the payment terminal is working properly or in response to receipt of credit card information or other financial transaction related information being scanned, read, or otherwise received by the payment terminal 7a for evaluation for authorization of the customer. This can result in the first payment terminal connector 2a conveying electricity or light, to the dispenser controller's first input terminal via the first payment terminal connector 2a. The dispenser connector 9 can receive that physical input via the first input terminal of the dispenser connector and respond to that activation by activating the first dispenser controller connector 4a so that electricity or light is emitted to the first input terminal of the payment terminal 7a to trigger adjustment of the display from the first graphic (e.g. default graphic or unavailable dispenser graphic, etc.) to the second graphic.

The payment terminal 7a can be configured to deactivate the first payment terminal connector 2a so all the payment terminal connections 2 are deactivated in the event the authorization is unable to be obtained. For instance, if the credit card information or other financial transaction related information is unable to be verified by the payment terminal 7a, all the payment terminal connections 2 with the dispenser controller can be deactivated so that all the dispenser controller connections 4 are also deactivated. This deactivation can trigger the payment terminal 7a causes the display to adjust back to the default graphic. Alternatively, in response to the payment information not being verified within a certain time period, the second dispenser connector 4b can be activated while the first payment terminal 2a is activated for a pre-selected retry time period to display a third graphic associated with the second dispenser connector 4b to cause the display 7b to illustrate a try again message to a customer to indicate the payment information was not authorized.

As yet another alternative, in response to the customer's payment information not being authorized, the payment terminal 7a can be configured to activate the second payment terminal connector 2b for a pre-selected unauthorized time period and subsequently deactivate the second payment terminal connector 2b and reactivate the first payment terminal connector 2a to trigger activation of the first dispenser connector 4a for a display of the default welcome graphic or second graphic associated with the first payment terminal 2a.

In the event that the payment information provided by the customer can be verified to authorize the customer, the payment terminal 7a can deactivate the first payment terminal connector 2a and activate the second payment terminal connector 2b so that the second input terminal of the dispenser controller is activated and receives electrical current, light, or other physical input from the payment terminal 7a via the second payment terminal connector 2b to indicate that the customer has been authorized for fueling. The dispenser controller 9 can be configured to respond to the activation of the second payment terminal connector 2b by deactivating the first dispenser controller connector 4a and activating the second dispenser controller connector 4b. The activation can result in electricity, or light being emitted from the dispenser controller 9 to the second input terminal of the payment terminal 7a to trigger adjustment of the display from the second graphic to the third graphic.

Alternatively, the second payment terminal connector 2b can be activated while the first payment terminal connector 2a remains activated as well. The dispenser controller 9 can respond to such activations by deactivating the first dispenser controller connector 4a and activating the second dispenser controller connector 4b. The activation can result in electricity, or light being emitted from the dispenser controller 9 to the second input terminal of the payment terminal 7a to trigger adjustment of the display from the second graphic to the third graphic.

The dispenser controller 9 can also receive sensor data or detector data to indicate that the dispenser 7 has detected the vehicle fuel tank as being full while the second payment terminal connector 2b is still active. The dispenser controller 9 can be configured to respond to that detected condition by deactivating the second dispenser controller connector 4b and activating the third dispenser controller connector 4c. The activation can result in electricity, or light being emitted from the dispenser controller 9 to the third input terminal of the payment terminal 7a to trigger adjustment of the display from the third graphic to the fourth graphic. In such a configuration, the fourth graphic can be configured to inform the consumer that fueling is complete.

Alternatively, the dispenser controller 9 can be configured to receive sensor data or detector data to indicate that the dispenser 7 has detected the nozzle of the dispenser has been connected to the vehicle fuel tank for fueling. The dispenser controller 9 can be configured to respond to that detected condition by deactivating the second dispenser controller connector 4b and activating the third dispenser controller connector 4c. The activation can result in electricity, or light being emitted from the dispenser controller 9 to the third input terminal of the payment terminal 7a to trigger adjustment of the display from the third graphic to the fourth graphic. In such a configuration, the fourth graphic can be configured to inform the consumer that fueling is about to begin. The graphic can also include information indicating that there may be temporary pauses in updating of the display or in fueling and that such pauses are normal.

In such an embodiment, the payment terminal can also have a fifth graphic or graphic file that can be stored in the memory 14b of the payment terminal 7a for display on the display 7b or generation of the fifth graphic via the display 7b as well. This fifth graphic can be associated with activation of a fourth dispenser controller connector 4d so that when this fourth dispenser controller connector 4d is active and provides input to the fourth input terminal of the payment terminal 7a, the payment terminal 7a causes the fifth graphic that can include text and/or images to be displayed to let a customer know information about a status of the customer's fueling.

For example, in some embodiments, the fourth graphic can be configured to inform a customer that the nozzle is connected and the customer must wait for the fueling process to start. This can occur due to a delay that can occur between when the nozzle is connected to a fuel tank and when gaseous fuel can be delivered to the dispenser for feeding to the fuel tank. In such an embodiment, the dispenser controller 9 can be configured to detect sensor data indicating that fuel has begun flowing to the dispenser for feeding to the fuel tank. In response to such a detection, the dispenser controller 9 can be configured to deactivate the third dispenser controller connector 4c and activate the fourth dispenser controller connector 4d to trigger display of the fifth graphic. The activation can result in electricity, or light being emitted from the dispenser controller 9 to the fourth input terminal of the payment terminal 7a to trigger adjustment of the display from the fourth graphic to the fifth graphic.

The payment terminal can also have a sixth graphic or graphic file that can be stored in the memory 14b of the payment terminal 7a for display on the display 7b or generation of the sixth graphic via the display 7b as well. This sixth graphic can be associated with activation of a fifth dispenser controller connector 4e so that when this fifth dispenser controller connector 4e is active and provides input to the fifth input terminal of the payment terminal 7a, the payment terminal 7a causes the sixth graphic that can include text and/or images to be displayed to let a customer know information about a status of the customer's fueling. For instance, the dispenser controller 9 can also receive sensor data or detector data to indicate that the dispenser 7 has detected the vehicle fuel tank as being full while the second payment terminal connector 2b is still active. The dispenser controller 9 can be configured to respond to that detected condition by deactivating the fourth dispenser controller connector 4d and activating the fifth dispenser controller connector 4e. The activation can result in electricity, or light being emitted from the dispenser controller 9 to the fifth input terminal of the payment terminal 7a to trigger adjustment of the display from the fourth graphic to the fifth graphic. In such a configuration, the fifth graphic can be configured to inform the consumer that fueling is complete so that the consumer returns the nozzle to the nozzle holder of the dispenser.

In yet other embodiments, the payment terminal can also have a seventh graphic or graphic file that can be stored in the memory 14b of the payment terminal 7a for display on the display 7b or generation of the seventh graphic via the display 7b as well. This seventh graphic can be associated with activation of a sixth dispenser controller connector 4f so that when this sixth dispenser controller connector 4f is active and provides input to the sixth input terminal of the payment terminal 7a, the payment terminal 7a causes the seventh graphic that can include text and/or images to be displayed to let a customer know information about a status of the customer's fueling.

In some embodiments that may utilize six dispenser controller connectors 4a-4f and seven graphics (first graphic through seventh graphic) associated with activation of these dispenser controller connectors and/or non-activation of the dispenser controller connections 4, the different graphic files and configurations of the payment terminal 7a and dispenser controller 9 can be adjusted from the above examples.

For instance, if no dispenser controller connector is active, a first graphic or graphic file can be stored in the memory 14b of the payment terminal 7a for display on the display 7b or generation of the first graphic via the display 7b. This first graphic can be default graphic that can be configured as a terminal unavailable graphic that includes text and/or images to inform a customer that the dispenser 7 is unavailable due to a technical issue, a need for maintenance, or other issue.

The dispenser controller 9 can be configured to actuate the first dispenser controller connector 4a to trigger adjustment in the display 7b via the payment terminal 7a in response to the payment terminal activating the first payment terminal connector 2a. For example, the payment terminal 7a can be configured to activate the first payment terminal connector 2a in response to the payment terminal 7a being operational and functional. This can result in the first payment terminal connector 2a conveying electricity or light, to the dispenser controller's first input terminal via the first payment terminal connector 2a. The dispenser controller 9 can receive that physical input via the first input terminal of the dispenser controller 9 and respond to that activation by activating the first dispenser controller connector 4a so that electricity or light is emitted to the first input terminal of the payment terminal 7a to trigger adjustment of the display from the first graphic (e.g. dispenser unavailable graphic) to the second graphic associated with the first dispenser controller connector 2a. In some embodiments, this second graphic can be a welcome display to instruct a consumer to provide payment information (e.g. credit card information, etc.) for authorization to initiate fueling.

The payment terminal 7a can subsequently receive credit card information or other financial transaction related information that is scanned, read, or otherwise received by the payment terminal 7a for evaluation for authorization of the customer. If the credit card information or other financial transaction related information is unable to be verified by the payment terminal 7a, the second dispenser controller connector 4b can be activated for a pre-selected period of time before the first dispenser controller connector 4a is again actuated and the second dispenser controller connector 4b is deactivated. This timed activation/deactivation can facilitate a display of a try again message at the payment terminal before the payment terminal 7a is returned to its welcome screen of the second graphic associated with the first dispenser controller connector 4a that instructs a customer to provide payment information.

While the customer payment information is being verified or the customer is being authorized, the dispenser controller can initiate a leak check. If the leak check fails to pass, the dispenser controller 9 can be configured to respond to the leak check error by deactivating the first dispenser controller connector 2a and activating the second dispenser controller connector 2b. The activation can result in electricity, or light being emitted from the dispenser controller 9 to the second input terminal of the payment terminal 7a to trigger adjustment of the display from the second graphic to the third graphic associated with the second dispenser controller connector 2b. This third graphic can be configured to inform the consumer that the consumer must reinitiate the payment verification process so that the entire process can be restarted.

In the event that the payment information provided by the customer can be verified to authorize the customer and the leak check is passed, the payment terminal 7a can deactivate the first payment terminal connector 2a and activate the second payment terminal connector 2b so that the second input terminal of the dispenser controller is activated and receives electrical current, light, or other physical input from the payment terminal 7a via the second payment terminal connector 2b to indicate that the customer has been authorized for fueling. The dispenser controller 9 can be configured to respond to the activation of the second payment terminal connector 2b by deactivating the first dispenser controller connector 2a and activating the third dispenser controller connector 4c. The activation can result in electricity, or light being emitted from the dispenser controller 9 to the third input terminal of the payment terminal 7a to trigger adjustment of the display from the second graphic to the fourth graphic associated with the third dispenser controller connector 4c. In such an embodiment, the fourth graphic can be configured to inform the customer via text and/or images that the consumer is authorized for fueling and should connect the dispenser nozzle to the vehicle fuel tank of the consumer's vehicle.

The dispenser controller 9 can be configured to receive sensor data or detector data to indicate that the dispenser 7 has detected the nozzle of the dispenser has been connected to the vehicle fuel tank for fueling while the second payment terminal connector is activated. The dispenser controller 9 can be configured to respond to that detected condition by deactivating the third dispenser controller connector 4c and activating the fourth dispenser controller connector 4d. The activation can result in electricity, or light being emitted from the dispenser controller 9 to the third input terminal of the payment terminal 7a to trigger adjustment of the display from the third graphic to the fifth graphic associated with the fourth dispenser controller connector 4d. In such a configuration, the fifth graphic can be configured to inform the consumer that fueling is about to begin so that the consumer understands there may be a slight delay in connection of the nozzle and initiation of fueling. This can occur due to a delay that can occur between when the nozzle is connected to a fuel tank and when gaseous fuel can be delivered to the dispenser for feeding to the fuel tank. In such an embodiment, the dispenser controller 9 can be configured to detect sensor data indicating that fuel has begun flowing to the dispenser for feeding to the fuel tank. In response to such a detection, the dispenser controller 9 can be configured to deactivate the fourth dispenser controller connector 4d and activate the fifth dispenser controller connector 4e to trigger display of the fifth graphic while the second payment terminal connector 2b is active. The activation can result in electricity, or light being emitted from the dispenser controller 9 to the fifth input terminal of the payment terminal 7a to trigger adjustment of the display from the fifth graphic to the sixth graphic associated with the fifth dispenser controller connector 4e. The sixth graphic can include text and/or images to be displayed to let a customer know information about a status of the customer's fueling and/or that pauses in fueling can occur as the fueling proceeds.

The dispenser controller 9 can also receive sensor data or detector data to indicate that the dispenser 7 has detected the vehicle fuel tank as being full while the second payment terminal connector 2b is still active. The dispenser controller 9 can be configured to respond to that detected condition by deactivating the fifth dispenser controller connector 4e and activating the sixth dispenser controller connector 4f. The activation can result in electricity, or light being emitted from the dispenser controller 9 to the sixth input terminal of the payment terminal 7a to trigger adjustment of the display from the sixth graphic to the seventh graphic associated with the sixth dispenser controller connector 4f. In such a configuration, the seventh graphic can be configured to inform the consumer that fueling is complete so that the consumer returns the nozzle to the nozzle holder of the dispenser.

Upon detection of the nozzle being returned to the nozzle holder or other parameter, the dispenser controller 9 can be configured to deactivate all the dispenser controller connections 4. In response to all the dispenser controller connections 4 being deactivated for a deactivation time period, the payment terminal can respond by deactivating the second payment terminal connector 2b that may be active and reactivating the first payment terminal connector 2a to trigger the dispenser controller 9 to actuate the first dispenser controller connector 2a for returning the display to the second graphic, which can be configured to invite a customer to provide payment information to the payment terminal.

In some embodiments, it is contemplated that only one of the dispenser controller connections 4 can be activated at any time so that while one dispenser controller connection 4 is active, all the other dispenser controller connections 4 are deactivated.

Some embodiments can be configured so that only one of the payment terminal connections 2 can be activated at any one time (e.g. only one of the payment terminal connections 2 can be activated at any time so that while one payment terminal connection 2 is active, all the other payment terminal connections 2 are deactivated. In other embodiments, the second payment terminal connector 2b can be activated only to trigger authorization of payment information and the first payment terminal connector 2a can be activated at all times to indicate the payment terminal 7a is functioning properly to avoid a display of the unavailable dispenser graphic. In such embodiment, the second payment terminal connector 2b may be deactivated when the dispenser 7 is not in use or a customer has yet to provide authorized payment information.

In yet other embodiments, it is contemplated the payment terminal 7a can include one or more third payment terminal connectors 2c. Such connector(s) can be activated or deactivated to trigger the dispenser controller 9 actuating one of the dispenser controller connectors in accordance with a pre-selected display control scheme so that no actual data is to be transferred between the payment terminal 7a and the dispenser controller 9 for control of the display 7b.

It should be appreciated that the above dispenser controller 9 and payment terminal 7a processing does not involve any communication protocol usage to convey information or commands between the payment terminal 7a and the dispenser controller 9 for controlling the display 7b. There is no use of a firewall, any type of API, or use of any type of communication protocol (e.g. TCP, TCP/IP, IP, HTTP, etc.). Also, no financial data of the consumer is conveyed to the dispenser controller 9 via such activation of the physical payment terminal connections 2 and/or dispenser controller connections 4. Instead, the payment terminal 7a and dispenser 9 can be configured to follow a pre-determined display control scheme based on the different input/output terminals that can be activated via transmission of light, voltage and/or current via these connections. This can permit embodiments to avoid use of firewalls or communication protocols for control of the display 7b. This can also help simplify payment terminal integration into dispensers and allow dispensers to be more easily assembled and installed in a facility for fuel dispensing. Moreover, this type of methodology can improve data security by limiting transmission of data related to consumer information (e.g. financial transaction data, etc.). Figure 3 illustrates an exemplary embodiment of a process that can be employed via an embodiment of our first exemplary embodiment of an apparatus 1 configured to dispense fuel to a vehicle that includes an exemplary embodiment of a control system configured to control a display during fueling of a vehicle.

In a first step S1, a determination can be made as to whether a payment terminal 7a that transmits current, voltage or light from the payment terminal 7a to a dispenser controller 9 via a payment terminal connection 2 is also receiving current, voltage, or light from the dispenser controller 9 via a dispenser controller connection 4 for providing an indicator that a display 7b should change.

In response to detecting a first payment terminal connector 2a is active, only the first of multiple different dispenser controller connectors 4a-4f between the dispensing controller 9 and the payment terminal 7a that convey voltage, current or light to the payment terminal 7a can be activated in a second step S2 (an example of which is discussed above). In other alternative configurations, only the first or second of multiple different dispenser controller connectors 4a-4f between the dispensing controller 9 and the payment terminal 7a that convey voltage, current or light to the payment terminal 7a can be activated in a second step S2 (examples of which are discussed above).

In a third step S3, the second or third of multiple different dispenser connectors between payment terminal 7a and dispensing controller 9 can be activated in response to detecting a second payment terminal connector 2b is active. In some embodiments, the first payment terminal connector 2a can also be deactivated during this third step S3. In situations where the third dispenser connector 4c is activated, the second dispenser connector 4b can also be deactivated in the third step S3 or other prior step as well.

While the second payment terminal connector 2b is active, at least one operational condition of fueling can be determined for deactivation of a dispensing controller connector and activation of a different dispensing controller connector so that the payment terminal adjusts the display 7b to illustrate a pre-selected display based on which dispensing controller connection 4 is activated in a fourth step S4. Examples of such deactivation and activation of dispenser controller connectors while the second payment terminal connector 2b is active is discussed above.

In response to determining that both the first and second payment terminal connectors 2a and 2b are deactivated, any active dispensing controller connection 4 can be deactivated so all dispensing controller connectors are deactivated and the payment terminal screen is returned to a dispenser unavailable graphic. In response to determining that fueling is complete and a nozzle is returned to a dispenser holder, the payment terminal can actuate its first payment terminal connector 2a and the dispenser controller 9 can actuate the first dispenser controller connector 4a so the display invites a consumer to provide payment information for fueling. For instance, in response to determining second payment terminal connector is deactivated and first payment terminal connector is activated 2a, only the first of multiple different dispenser controller connections 4 between the dispensing controller 9 and the payment terminal 7a that convey voltage or current to the payment terminal for display of an introduction display can be activated in a fifth step S5.

Embodiments of the process can also include other steps. For instance, the steps or sequencing discussed above can also be utilized as in the above discussed exemplary embodiments. As another example, the payment terminal 7a can be configured to deactivate all the payment terminal connections 2 in response to detecting that all the dispenser controller connectors are deactivated and have all been deactivated for a pre-selected time period while the second payment terminal connector 2b is still activated.

As noted above, the dispenser controller 9 and payment terminal 7a processing can be configured so that it does not involve any communication protocol usage to convey information or commands between the payment terminal 7a and the dispenser controller 9 for controlling the display 7b for embodiments of our process. There is no use of a firewall, any type of API, or use of any type of communication protocol (e.g. TCP, TCP/IP, IP, HTTP, etc.). Also, no financial data of the consumer is conveyed to the dispenser controller 9 via such activation of the physical payment terminal connections 2 and/or dispenser controller connections 4. Instead, the payment terminal 7a and dispenser 9 can be configured to follow a pre-determined display control scheme based on the different input/output terminals that can be activated via transmission of light, voltage and/or current via these connections. This can permit embodiments to avoid use of firewalls or communication protocols for control of the display 7b. This can also help simplify payment terminal integration into dispensers and allow dispensers to be more easily assembled and installed in a facility for fuel dispensing. Moreover, this type of methodology can improve data security by limiting transmission of data related to consumer information (e.g. financial transaction data, etc.).

Embodiments of our apparatus or process can also include other features. For example, embodiments of the dispenser controller 9 can utilize more than six or less than 6 dispenser connections 4. Also, the payment terminal 7a can utilize more than 2 payment terminal connections 2.

As yet another example, the various different graphics, graphic files, or graphic generation files can be stored in the memory of the payment terminal 7a or memory that is communicatively connectable to a processor 14a of the payment terminal 7a. The displayable graphics can include text, images, and/or other visible indicia (e.g. numbers, symbols, etc.) that are associated with a respective dispenser controller connection 4 being active or combination of such connections being active.

Embodiment of the apparatus can be configured for dispensing of hydrogen or natural gas for fueling vehicles that are powered by hydrogen or natural gas. Other embodiments can be configured for other type of fueling station dispenser configurations as well.

It should be appreciated that modifications to the embodiments explicitly shown and discussed herein can be made to meet a particular set of design objectives or a particular set of design criteria. For instance, the arrangement of electrical connections, sensors, controller, communication connection elements (e.g. wiring, intermediate network nodes, network arrangement, etc.), and other elements can be arranged, sized, and designed to meet a particular plant layout design or fueling station design that accounts for available area of the facility, a particular array of sensors, controller hardware, and other design considerations. It should be appreciated that embodiments of the apparatus can be configured to include various process control elements positioned and configured to monitor and control operations for hydrogen production (e.g. temperature sensors, pressure sensors, flow sensors, voltage and/or current detectors, an automated process control system having at least one work station that includes a processor, non-transitory memory and at least one transceiver for communications with the sensor elements, and controllers for providing a user interface for an automated process control system that may be run at the work station and/or another computer device, etc.).

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of controllers, apparatuses, systems, and methods of making and using the same have been shown and described above, it is to be distinctly understood that the invention is not limited thereto but may be otherwise variously embodied and practiced within the scope of the following claims.

## Claims

1. A process for controlling a display of a dispenser of fuel, the process comprising:
in response to a dispenser controller detecting activation of a first payment terminal connector, the dispenser controller activating a first dispenser controller connector connected between a payment terminal and the dispenser controller to trigger a first adjustment of graphical information shown on the display based on a data store associated with the first dispenser controller connector; and
in response to the dispenser controller detecting activation of a second payment terminal connector, the dispenser controller activating a second dispenser controller connector connected between the payment terminal and the dispenser controller to trigger a second adjustment of graphical information shown on the display based on a data store associated with the second dispenser controller connector.

2. The process of claim 1, further comprising:
in response to the dispenser controller detecting that fueling is complete, the dispenser controller activating a third dispenser controller connector connected between the payment terminal and the dispenser controller to trigger a third adjustment of graphical information shown on the display based on a data store associated with the third dispenser controller connector to instruct a customer that fueling is complete.

3. The process of claim 1 or 2, further comprising:
in response to the dispenser controller detecting that a nozzle of the dispenser is connected to a fuel tank while the second payment terminal connector is active, the dispenser controller activating a third dispenser controller connector connected between the payment terminal and the dispenser controller to trigger a third adjustment of graphical information shown on the display based on a data store associated with the third dispenser controller connector;
wherein in response to the dispenser controller detecting that fueling is complete, the dispenser controller activating a fourth dispenser controller connector connected between the payment terminal and the dispenser controller to trigger a fourth adjustment of graphical information shown on the display based on a data store associated with the fourth dispenser controller connector to instruct a customer that fueling is complete;
and/or
wherein in response to the dispenser controller detecting that fuel is being passed to a vehicle fuel tank via the dispenser while the second payment terminal connector is active, the dispenser controller activating a fourth dispenser controller connector connected between the payment terminal and the dispenser controller to trigger a fourth adjustment of graphical information shown on the display based on a data store associated with the fourth dispenser controller connector; and
in response to the dispenser controller detecting that fueling is complete, the dispenser controller activating a fifth dispenser controller connector connected between the payment terminal and the dispenser controller to trigger a fifth adjustment of graphical information shown on the display based on a data store associated with the fifth dispenser controller connector to instruct a customer that fueling is complete.

4. The process of any one of the preceding claims, further comprising:
the payment terminal activating the first payment terminal connector in response to receipt of financial information received via a reader of the first payment terminal;
the payment terminal activating the second payment terminal connector in response to authorization of the financial information.

5. The process of claim 4, comprising:
the payment terminal responding to the activating of the first dispenser controller connector by adjusting the display based on the data store associated with the first dispenser controller connector; and
the payment terminal responding to the activating of the second dispenser controller connector by adjusting the display based on the data store associated with the second dispenser controller connector.

6. The process of any one of the preceding claims, wherein the detecting of the activation of the first payment terminal connector occurs without use of a communication protocol and without use of an application programming interface (API) and the activating of the first dispenser controller connector connected between the payment terminal and the dispenser controller to trigger the first adjustment of graphical information shown on the display based on the data store associated with the first dispenser controller connector occurs without use of a communication protocol and without use of an API; and
the detecting of the activation of the second payment terminal connector occurs without use of a communication protocol and without use of an API and the activating of the second dispenser controller connector connected between the payment terminal and the dispenser controller to trigger the second adjustment of graphical information shown on the display based on the data store associated with the second dispenser controller connector occurs without use of a communication protocol and without use of an API.

7. The process of any one of the preceding claims, comprising:
adjusting graphical information shown on the display based on the data store associated with the first dispenser controller connector and/or the second dispenser controller connector without use of a communication protocol, without use of an application programming interface (API), and without exchanging of customer related information between the dispenser controller and the payment terminal.

8. A control system for an apparatus configured to provide fuel to a dispenser for fueling a vehicle, comprising:
a dispenser controller for a dispenser positioned and configured to feed fuel to a vehicle fuel tank, the dispenser controller connected to a payment terminal via a plurality of payment terminal connections and a plurality of dispenser controller connections;
the dispenser controller configured so that:
in response to detecting activation of a first payment terminal connector of the payment terminal connections, the dispenser controller activates a first dispenser controller connector of the dispenser controller connections to trigger a first adjustment of graphical information shown on a display of the dispenser based on a data store associated with the first dispenser controller connector; and
in response to the dispenser controller detecting activation of a second payment terminal connector of the payment terminal connections, the dispenser controller activates a second dispenser controller connector of the dispenser controller connections to trigger a second adjustment of graphical information shown on the display based on a data store associated with the second dispenser controller connector.

9. The control system of claim 8, further comprising:
the payment terminal, the payment terminal being communicatively connected to a non-transitory memory having the data store associated with the first dispenser controller connector and the data store associated with the second dispenser controller connector.

10. The control system of claim 8, wherein the dispenser controller is also configured so that:
in response to the dispenser controller detecting that a nozzle of the dispenser is connected to a fuel tank while the second payment terminal connector is active, the dispenser controller activates a third dispenser controller connector of the dispenser controller connections to trigger a third adjustment of graphical information shown on the display based on a data store associated with the third dispenser controller connector;
wherein in response to the dispenser controller detecting that fueling is complete, the dispenser controller activates a fourth dispenser controller connector of the dispenser controller connections to trigger a fourth adjustment of graphical information shown on the display based on a data store associated with the fourth dispenser controller connector to instruct a customer that fueling is complete; and/or
wherein in response to the dispenser controller detecting that fuel is being passed to a vehicle fuel tank via the dispenser while the second payment terminal connector is active, the dispenser controller activates a fourth dispenser controller connector of the dispenser controller connections to trigger a fourth adjustment of graphical information shown on the display based on a data store associated with the fourth dispenser controller connector; and
in response to the dispenser controller detecting that fueling is complete, the dispenser controller activates a fifth dispenser controller connector of the dispenser controller connections to trigger a fifth adjustment of graphical information shown on the display based on a data store associated with the fifth dispenser controller connector to instruct a customer that fueling is complete.

11. The control system of claim 10, further comprising:
the payment terminal, the payment terminal being communicatively connected to a non-transitory memory having the data store associated with the first dispenser controller connector, the data store associated with the second dispenser controller connector, the data store associated with the third dispenser controller connector, the data store associated with the fourth dispenser controller connector, and the data store associated with the fifth dispenser controller connector.

12. The control system of claim 11, wherein the dispenser controller and the payment terminal are configured such that:
the detecting of the activation of the first payment terminal connector occurs without use of a communication protocol and without use of an application programming interface (API) and the activating of the first dispenser controller connector connected between the payment terminal and the dispenser controller to trigger the first adjustment of graphical information shown on the display based on the data store associated with the first dispenser controller connector occurs without use of a communication protocol and without use of an API;
the detecting of the activation of the second payment terminal connector occurs without use of a communication protocol and without use of an API and the activating of the second dispenser controller connector to trigger the second adjustment of graphical information shown on the display based on the data store associated with the second dispenser controller connector occurs without use of a communication protocol and without use of an API;
the detecting of the activating of the third dispenser controller connector to trigger the third adjustment of graphical information shown on the display based on the data store associated with the third dispenser controller connector occurs without use of a communication protocol and without use of an API;
the detecting of the activating of the fourth dispenser controller connector to trigger the fourth adjustment of graphical information shown on the display based on the data store associated with the fourth dispenser controller connector occurs without use of a communication protocol and without use of an API; and
the detecting of the activating of the fifth dispenser controller connector to trigger the fifth adjustment of graphical information shown on the display based on the data store associated with the fifth dispenser controller connector occurs without use of a communication protocol and without use of an API.

13. A dispenser controller comprising:
a processor connected to a non-transitory memory;
a plurality of physical connection terminals having:
a first input terminal for a first payment terminal connector extending between a payment terminal and the first input terminal;
a second input terminal for a second payment terminal connector extending between the payment terminal and the second input terminal;
a first output terminal for a first dispenser controller connector extending between the first output terminal and the payment terminal;
a second output terminal for a second dispenser controller connector extending between the second output terminal and the payment terminal; and
a third output terminal for a third dispenser controller connector extending between the third output terminal and the payment terminal;
wherein the dispenser controller is configured so that:
in response to detecting activation of the first payment terminal connector, the dispenser controller activates the first dispenser controller connector to trigger a first adjustment of graphical information shown on a display of a dispenser based on a data store associated with the first dispenser controller connector;
in response to the dispenser controller detecting activation of the second payment terminal connector, the dispenser controller activates the second dispenser controller connector to trigger a second adjustment of graphical information shown on the display based on a data store associated with the second dispenser controller connector; and
in response to the dispenser controller detecting that the second payment terminal connector is active and that fueling is completed, the dispenser controller activates the third dispenser controller connector to trigger a third adjustment of graphical information shown on the display based on a data store associated with the third dispenser controller connector.

14. The dispenser controller of claim 13, wherein:
the first input terminal is configured to detect voltage, current and/or light transmitted via the first payment terminal connector;
the second input terminal is configured to detect voltage, current and/or light transmitted via the second payment terminal connector;
the first output terminal is configured to transmit voltage, current and/or light via the first dispenser controller connector;
the second output terminal is configured to transmit voltage, current and/or light via the second dispenser controller connector; and
the third output terminal is configured to transmit voltage, current and/or light via the third dispenser controller connector.

15. The dispenser controller of claim 14, wherein the dispenser controller is configured so that the detecting of the activation of the first payment terminal connector occurs without use of a communication protocol and without use of an application programming interface (API) and the detecting of the activation of the second payment terminal connector occurs without use of a communication protocol and without use of an API.
